# EUROPÄISCHE PATENTSCHRIFT

(11) **EP 2 201 907 B1**
(45) Veröffentlichungstag und Bekanntmachung des Hinweises auf die Patenterteilung: **18.12.2013**
(21) Anmeldenummer: 08022455.3
(22) Anmeldetag: 24.12.2008
(51) Int. Cl.: A61C 5/02

(54) **Verfahren und Vorrichtung zum Programmieren eines zur Wurzelkanalaufbereitung dienenden schnurlosen Handstücks**
Method and apparatus for programming a cordless handpiece serving the preparation of a root canal
Procédé et dispositif de programmation d'une pièce manuelle sans fil servant à la préparation d'un canal de racine

(43) Veröffentlichungstag der Anmeldung: 30.06.2010
(73) Patentinhaber: W & H Dentalwerk Bürmoos GmbH, 5111 Bürmoos (AT)
(72) Erfinder: Helfenbein, Gerald, 5133 Gilgenberg (AT); Putz, Stefan, 5110 Oberndorf (AT); Schröck, Rainer, 5111 Bürmoos (DE)
(74) Vertreter: Benda, Ralf

(56) Entgegenhaltungen:
- DE-A1- 19 520 765
- DE-A1-102007 020 100
- US-A- 5 295 833

## Beschreibung

Die vorliegende Erfindung bezieht sich auf ein Verfahren und auf eine Vorrichtung zum Programmieren eines zur Wurzelkanalaufbereitung dienenden schnurlosen Handstücks nach den Oberbegriffen der Ansprüche 1 und 12.

Derartige Vorrichtungen zur Wurzelkanalaufbereitung weisen zumindest ein schnurloses Handstück sowie ein Ladegerät auf. Das schnurlose Handstück ist neben einer Werkzeugaufnahme für ein Behandlungswerkzeug mit einem Antriebsmotor und einer für die Stromversorgung des Motors dienenden Batterie ausgestattet. Vorzugsweise kann des Weiteren eine Messschaltung zur Messung der Wurzelkanallänge und/ oder der an dem Werkzeug anliegenden Last im Handstück angeordnet sein. Bei Messung der Wurzelkanallänge wird das in einer Werkzeugaufnahme aufgenommene Behandlungswerkzeug als Elektrode genutzt und steht mit der Wurzelkanallängenmessschaltung über ein im Kopf, oder über ein extern am Handstück angeordnetes Kontaktstück in elektrisch leitender Verbindung. Die Steueranordnung der Messschaltung stoppt das Werkzeug selbstständig, oder dreht es selbstständig in Gegenrichtung, wenn sie feststellt, dass das Werkzeug eine Sollposition in einem Wurzelkanal erreicht hat, oder wenn ein vorgegebener Drehmomentwert überschritten wird. Zur Aufbereitung eines Wurzelkanals wird auf Grund der zu behandelnden Wurzelkanalanatomie eine Vielzahl unterschiedlicher Werkzeuge, insbesondere Feilen mit unterschiedlichen Durchmessern und Werkzeugeigenschaften, wie z.B. der Bruchfestigkeit, verwendet. Somit unterscheiden sich diese Werkzeuge wesentlich hinsichtlich ihrer einzustellenden Parameter, wie z.B. der maximal zulässigen Drehzahl oder Drehmoments.

Eine derartige medizinische, insbesondere dentale, Vorrichtung und ein Verfahren zur Einstellung des schnurlosen Handstücks auf die Parameter des Behandlungswerkzeugs zur Wurzelkanalaufbereitung ist aus der DE 19520765 B4 bekannt.

Die aus dem Stand der Technik bekannte Vorrichtung zur Wurzelkanalaufbereitung mit zumindest einem schnurlosen Handstück und einem Ladegerät weist mehrere Stellelemente zur Einstellung des Handstücks auf die jeweiligen Parameter des eingesetzten Werkzeugs auf. Die verschiedenen Stellelemente, insbesondere zur Einstellung der Drehzahl, des maximal zulässigen Drehmoments, und der Autofunktionsparameter, wie z.B. Autostopp oder Autoreverse, können sowohl am schnurlosen Handstück als auch am Ladegerät vorgesehen sein. Der Anwender kann so mittels der mehreren Stellelemente sein Handstück auf die Parameter des eingesetzten Werkzeugs abstimmen.

Als nachteilig dieser Ausgestaltung erweist sich das manuelle Einstellen der einzelnen Werkzeug- und Handstückparameter mittels der mehreren Stellelemente am Handstück oder an dem Ladegerät.

Durch die zahlreichen Werkzeugparameter, wie z.B. der maximalen Drehzahl, des maximalen Drehmoments, oder der zahlreichen Handstückparameter, wie z.B. der Autofunktionsparameter, wie Autostopp oder Autoreverse, bei denen das Werkzeug selbstständig in Gegenrichtung dreht, oder stoppt, wenn das Werkzeug eine bestimmte Position im Wurzelkanal erreicht hat, oder eine bestimmte Last am Werkzeug anliegt, liegt eine komplexe und zeitraubende Bedienung der schnurlosen Vorrichtung zur Wurzelkanalaufbereitung vor. Durch die Vielzahl an Parametern muss der Anwender bei jedem Wechsel eines Werkzeuges das Handstück auf die neuen Werkzeug- und Handstückparameter abstimmen. Hierzu muss der Anwender die mehreren Stellelemente am Handstück und / oder am Ladegerät betätigen.

Des Weiteren birgt die im Stand der Technik bekannte Vorrichtung zur Wurzelkanalaufbereitung die Gefahr von möglichen Fehlerquellen. Durch die zahlreich einzustellenden Parameter besteht die Gefahr, dass der Anwender mögliche Werte falsch einstellt und es zu Komplikationen bei der Aufbereitung des Wurzelkanals kommt, wie z.B. der Bruch der Feile im Wurzelkanal auf Grund zu hoch eingestellter Drehmomentgrenzen für das eingesetzte Werkzeug.

Der vorliegenden Erfindung liegt daher die Aufgabe zugrunde, ein Verfahren und eine Vorrichtung zur Programmierung eines schnurlosen Handstücks zur Wurzelkanalaufbereitung zu schaffen, die es ermöglicht die Nachteile des Stand der Technik zur vermeiden und ein schnurloses Handstück einfach und unter Ausschluss möglicher Fehlerquellen zu programmieren.

Gemäß einem Ausführungsbeispiel eines Verfahrens zur Programmierung eines zur Wurzelkanalaufbereitung dienenden schnurlosen Handstücks mit einem ersten Speicher und einer Werkzeugaufnahme für ein Behandlungswerkzeug wird dieses mittels zur Verfügung stellen einer ersten Datenmenge mit mehreren Datensätzen auf einem zweiten Speicher, der insbesondere in einer Basisstation oder in einer Speicherkarte angeordnet ist, wobei jeder Datensatz zumindest einen dem schnurlosen Handstück und/ oder dem betreibbaren Werkzeug zugeordneten Parameter umfasst, Auswählen einer Teildatenmenge aus der ersten Datenmenge, Übertragen der Teildatenmenge mit mehreren Datensätzen auf den ersten Speicher des Handstücks und manuelles oder automatisches Auswählen eines Datensatzes zum Betrieb des Handstücks, aus den mehreren Datensätzen der übertragenen Teildatenmenge mittels zumindest eines Stellelements oder automatisch mittels eines Werkzeugidentifikationsmittels an dem Handstück programmiert.

Zur Programmierung des schnurlosen Handstücks wird in einem zweiten Speicher, insbesondere in einer Basisstation, welche vorzugsweise als Ladegerät für das batteriebetriebene Handstück ausgebildet ist, oder in einer Speicherkarte, eine erste Datenmenge mit mehreren Datensätzen bereitgestellt. Jeder dieser Datensätze enthält zumindest einen Werkzeugparameter für eine für die Aufbereitung des Wurzelkanals dienende Feile und/ oder einen Handstückparameter. Jedem Datensatz ist eine Bezeichnung, insbesondere ein Feilenname der zugehörigen Feile, zugeordnet. Um nun dem Anwender eine Vorauswahl an Feilen, insbesondere der von ihm in Gebrauch befindlichen Feilen, zu ermöglichen, wird auf dem zweiten Speicher eine Bibliothek bereitgestellt in der alle Datensätze, insbesondere möglichst alle am Markt erhältlichen Feilen, hinterlegt sind. Der Anwender kann nun mittels zumindest eines Stellelements aus der Bibliothek seine Vorauswahl an Datensätzen treffen, wobei er bevorzugt die Datensätze je nach Feilen auswählt, die er besonders häufig verwendet oder die er für die nächste Behandlung benötigt. Anschließend wird eine Teildatenmenge, die zumindest aus einem Datensatz und maximal aus der gesamten Datenmenge besteht, auf den Speicher des Handstücks übertragen. Hierzu wird das Handstück mit dem ersten Speicher oder lediglich der erste Speicher selbst, der insbesondere auch als Speicherkarte ausgebildet sein kann, vorzugsweise mittels elektrischer Kontakte oder drahtloser Datenübertragung, mit dem zweiten Speicher verbunden. Nun kann der Anwender den passenden Datensatz, insbesondere den Feilennamen der eingesetzten Feile, mittels zumindest eines Stellelements auswählen. Das zumindest eine Stellelement zur Auswahl der Teildatenmenge oder eines Datensatzes ist vorzugsweise als Taster, Potentiometer, Joystick, Näherungssensor oder als Touchscreen Display ausgebildet. Hierzu weist das zumindest eine Stellelement vorzugsweise mehrere Funktionen zur Menüführung in der Feilenbibliothek, wie z.B. "links", "rechts", "oben" und nach "unten" - Funktion sowie eine Bestätigungsfunktion mittels "ok", auf. Des Weiteren können weitere Stellelemente am Handstück oder an der Basisstation für Werkzeug und Handstück übergreifende Parameter, wie z.B. ein Ein- / Aus-Schalter für die Wurzelkanallängenmessschaltung, oder ein Drehmomentreduzierungsschalter für schwierige Anatomie, der alle eingestellten Drehmomentwerte um 5 bis 20 Prozent reduziert, angeordnet sein.

Um eine vollständige erste Datenmenge für alle am Markt vorhandenen Feilen zu gewährleisten, ist es nötig die erste Datenmenge regelmäßig zu aktualisieren, um alle neuen Feilen und deren Parameter als Datensatz mit aufzunehmen. Dies wird mittels der Übertragung der bestehenden Datensätze und der neuen Datensätze oder lediglich der neuen Datensätze von einem dritten Speicher auf den zweiten Speicher ermöglicht. Hierzu wird der dritte Speicher, der insbesondere als Speicherkarte, vorzugsweise als USB-Stick, Smart Media Karte, Memory Stick, Multimedia Karte, oder Secure Digital Memory Karte (SD Karte oder Mini SD Karte), ausgebildet ist, über eine dazu passende Schnittstelle mit dem zweiten Speicher verbunden und die Datensätze übertragen. In einer weiteren Ausführung können die Daten auch durch drahtlose Datenübertragung mittels Radiofrequenzwellen, Infrarot, Funk, oder induktiver oder kapazitiver Datenübertragung vom dem dritten Speicher auf den zweiten Speicher übertragen werden.

Alternativ zur Speicherung der ersten Datenmenge auf einem zweiten Speicher, vorzugsweise in einer Basisstation, kann die erste Datenmenge auch auf dem zur Aktualisierung der ersten Datenmenge dienenden dritten Speicher verbleiben. Somit wird das Handstück direkt mittels der Übertragung einer Teildatenmenge von dem dritten Speicher, insbesondere von einer Speicherkarte, programmiert. Die gesamte Datenmenge verbleibt hierbei auf dem dritten Speicher.

Die Auswahl der Teildatenmenge erfolgt mittels zumindest eines Stellelements, welches am Handstück selbst, an dem zweiten Speicher oder an dem dritten Speicher, angeordnet oder damit verbunden ist. Der Anwender programmiert somit sein Handstück nur mit den für ihn relevanten Datensätzen.

Die Auswahl eines Datensatzes aus der übertragenen Teildatenmenge kann manuell durch den Anwender mittels zumindest eines Stellelements, oder automatisch mittels Werkzeugidentifikationsmitteln, insbesondere durch Identifizierung durch Radiofrequenzwellen (RFID), durch einen Strichcode am Werkzeug und ein Lesegerät am Handstück, oder mittels zumindest eines Sensors am Handstück und Identifizierung auf Grund eines erzeugten Magnetfeldes, oder der Bestimmung des Werkzeugmaterials, der Materialstärke, oder der Materialhärte, erfolgen. Bei dieser Ausführung muss der Anwender lediglich eine Vorauswahl der von ihm in Gebrauch befindlichen Feilen treffen. Alle weiteren Schritte bei der Programmierung des Handstücks werden automatisch vorgenommen.

Das vorliegende Verfahren und Vorrichtung zur Programmierung eines schnurlosen Handstücks zeichnen sich durch eine Reihe erheblicher Vorteile aus.

Durch das Bereitstellen einer ersten Datenmenge mit mehreren Datensätzen passend zu jedem einsetzbaren Werkzeug und Handstück, wird eine schnelle und einfache Bedienung für den Anwender gewährleistet. Es ist nicht mehr nötig jeden Parameter für das Werkzeug und/ oder das Handstück vor dem Betrieb jedes einzelnen Werkzeugs an dem Handstück oder an einer Basisstation manuell einzustellen. Somit ergeben sich für den Anwender eine Zeitersparnis bei der Programmierung der Voreinstellungen des Werkzeugs und Handstücks, sowie eine Minimierung der Stellelemente zur Einstellung der verschiedenen Parameter.

Des Weiteren werden mittels des vorliegenden Verfahrens und Vorrichtung auf Grund fertiger und auf das Werkzeug und Handstück abgestimmter Datensätze mögliche Fehlerquellen bei der Programmierung seitens des Anwenders minimiert bzw. gänzlich ausgeschlossen. Durch die manuelle oder automatische Auswahl fertiger Datensätze am Handstück ist es für den Anwender nicht möglich falsche Parameter, wie z.B. die maximal zulässige Drehzahl oder das Drehmoment, für ein Werkzeug einzustellen.

Ein weiterer Vorteil ist die Möglichkeit der Auswahl einer Teildatenmenge aus einer ersten Datenmenge zur Programmierung des Handstücks. Durch das Übertragen lediglich einer Teildatenmenge, insbesondere der Datensätze der seitens des Anwenders in Gebrauch befindlichen Feilen, wird eine übersichtliche Vorauswahl am Handstück gewährleistet. Auf einem weiteren Speicher steht dem Anwender weiterhin eine vollständige Datenmenge zu möglichst allen am Markt erhältlichen Feilen zur Verfügung.

Durch einen weiteren Speicher, insbesondere einer Speicherkarte, wird die Aktualität der ersten Datenmenge auf dem zweiten Speicher gewährleistet. Durch das Laden des zweiten Speichers mittels eines weiteren Speichers kann die Datenmenge ständig mit neuen Datensätzen aktualisiert und vervollständigt werden.

Im Rahmen der Erfindung versteht es sich selbstverständlich, dass das vorliegende Verfahren und die Vorrichtung dazu zur Programmierung eines Handstücks nicht auf die in der Beschreibung genannten Handstücke zur Wurzelkanalaufbereitung beschränkt ist. Vielmehr können weitere Handstücke zur allgemeinen Behandlung im medizinischen, insbesondere dentalen, Bereich programmiert werden.

Nachfolgend wird die Erfindung anhand eines Ausführungsbeispiels und in Verbindung mit den beigefügten Zeichnungen erläutert.

Dabei zeigt:
Figur 1 ein zur Wurzelkanalaufbereitung dienendes schnurloses Handstück mit einem ersten Speicher bestehend aus einem Instrumententeil und einem Hauptteil,
Figur 2 eine Basisstation mit einem zweiten Speicher zur Aufnahme des schnurlosen Handstücks, insbesondere zur Versorgung des Handstücks mit Energie,
Figur 3 einen weiteren Speicher zum Laden des Speichers in der Basisstation und/ oder des Speichers im Handstück;

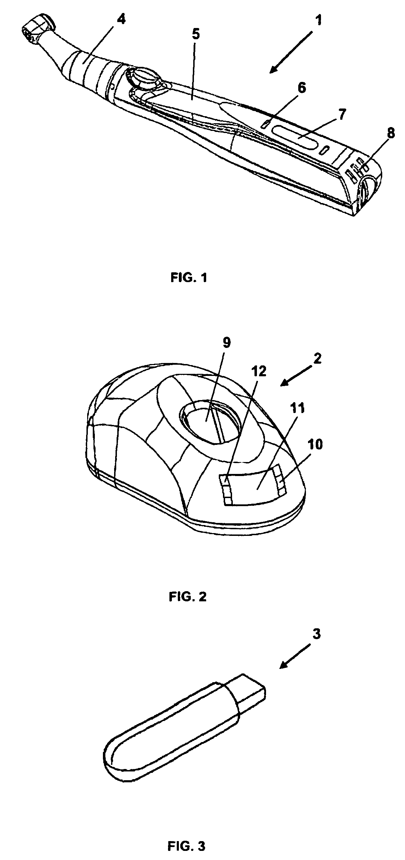

In Figur 1 wird ein schnurloses Handstück 1 vorzugsweise zur Wurzelkanalaufbereitung gezeigt. Das Handstück 1 besteht aus einem Instrumententeil 4 sowie einem Hauptteil 5. Hauptteil 5 bildet die Antriebseinheit für das schnurlose Handstück 1. In diesem ist neben dem Antriebsmotor mit einer Ausgangswelle zur Ankopplung des Instrumententeils 4, eine zur elektrischen Versorgung des Motors dienende Batterie angeordnet. Zum Laden der Batterie befinden sich Ladekontakte 8 an dem Hauptteil 5. Des Weiteren ist eine Steuerung und ein erster Speicher zum Hinterlegen einer auf das Handstück 1 übertragbaren Teildatenmenge in dem Hauptteil 5 angeordnet. Die Auswahl eines Datensatzes aus der Teildatenmenge erfolgt mittels zumindest eines Stellelements 6 und eines Displays 7. Das Handstück weist des Weiteren eine Datenempfangseinheit zur Übertragung einer Teildatenmenge von der Basisstation 2 oder von einem weiteren Speicher 3 auf das Handstück 1 auf. Diese Schnittstelle ist vorzugsweise drahtgebunden über die Ladekontakte 8 oder mittels weiterer elektrischer Kontakte ausgebildet. Das Instrumententeil 4 dient zur Übertragung der Antriebsbewegung von der Ausgangswelle des Antriebsmotors auf das Werkzeug.

Figur 2 zeigt eine zu der zur Wurzelkanalaufbereitung dienenden Vorrichtung gehörende Basisstation 2. Diese ist vorzugsweise als Ladegerät für das schnurlose Handstück 1 ausgebildet. In der Basisstation 2 ist eine Ladeschaltung zum Laden der in dem Handstück 1 befindlichen Batterie angeordnet. Hierzu wird das Handstück 1 in der Basisstation 2 mittels der Aufnahme 9 positioniert. Des Weiteren sind eine Steuerung und ein zweiter Speicher in der Basisstation 2 untergebracht. Dieser zweite Speicher dient zur Bereitstellung der ersten Datenmenge. Mittels des zumindest einen Stellelements 10 sowie des Displays 11 an der Basisstation kann der Anwender eine auf das Handstück 1 zu übertragende Teildatenmenge auswählen. Neben dem Stellelement 10 können weitere Stellelemente 12 zur Einstellung weiterer Werkzeug und Handstück übergreifender Funktionen auf der Basisstation 2 angeordnet sein. Zur Übertragung einer Teildatenmenge von einem dritten Speicher 3 auf die Basisstation 2 und von der Basisstation 2 auf das Handstück weist die Basisstation 2 eine Datenempfangs- und Sendeeinheit auf. Die Schnittstelle zwischen dem dritten Speicher 3 und der Basisstation 2 ist ebenfalls vorzugsweise drahtgebunden, insbesondere durch eine Aufnahme für eine Speicherkarte, ausgebildet.

Figur 3 zeigt einen weiteren, vorzugsweise dritten, Speicher 3 der als Speicherkarte, insbesondere als USB-Stick, Smart Media Karte, Memory Stick, Multimedia Karte, oder Secure Digital Memory Karte (SD Karte oder Mini SD Karte), ausgebildet ist. Diese standardisierte Speicherkarte dient zur Übertragung von Datensätzen auf die Basisstation 2 oder direkt auf das Handstück 1. Hierzu befinden sich jeweils an der Basisstation 2 und / oder an dem Handstück 1 eine Schnittstelle zur Aufnahme der Speicherkarte.

Die Erfindung ist nicht auf das beschriebene Ausführungsbeispiel beschränkt. Im Rahmen der Erfindung versteht es sich selbstverständlich, dass die Datenübertragung von der Basisstation 2 auf das Handstück 1 oder von dem weiteren, insbesondere dritten, Speicher 3 auf die Basisstation 2 oder direkt auf das Handstück 1 durch drahtlose Datenübertragung erfolgen kann. Hierzu erfolgt die Übertragung vorzugsweise mittels Radiofrequenzwellen, Infrarot, Funk, oder induktiver oder kapazitiver Datenübertragung.

## Patentansprüche

1. Verfahren zum Programmieren eines zur Wurzelkanalaufbereitung dienenden schnurlosen Handstücks (1) mit einem ersten Speicher und einer Werkzeugaufnahme für ein Behandlungswerkzeug, mit den Schritten:
- zur Verfügung stellen einer ersten Datenmenge mit mehreren Datensätzen auf einem zweiten Speicher, der insbesondere in einer Basisstation (2) oder in einer Speicherkarte (3) angeordnet ist, wobei jeder Datensatz zumindest einen dem schnurlosen Handstück (1) und/ oder dem betreibbaren Werkzeug zugeordneten Parameter umfasst,
- Auswählen einer Teildatenmenge aus der ersten Datenmenge, **gekennzeichnet durch**
- Übertragen der Teildatenmenge mit mehreren Datensätzen auf den ersten Speicher des Handstücks (1),
- manuelles oder automatisches Auswählen eines Datensatzes zum Betrieb des Handstücks (1) aus den mehreren Datensätzen der übertragenen Teildatenmenge mittels zumindest eines Stellelements (6) oder automatisch mittels eines Werkzeugidentifikationsmittels an dem Handstück (1).

2. Verfahren nach Anspruch 1, **dadurch gekennzeichnet, dass** die Übertragung der Teildatenmenge von dem zweiten Speicher auf den ersten Speicher des Handstücks (1) drahtgebunden, vorzugsweise mittels der in der Basisstation (2) befindlichen Ladekontakte für das batteriebetriebene Handstück (1) oder mittels weiterer elektrischer Kontakte, erfolgt.

3. Verfahren nach Anspruch 1, **dadurch gekennzeichnet, dass** die Übertragung der Teildatenmenge von dem zweiten Speicher auf den ersten Speicher des Handstücks (1) drahtlos, insbesondere mittels Radiofrequenz, Infrarot, Funk, oder mittels induktiver oder kapazitiver Datenübertragung, erfolgt.

4. Verfahren nach einem der vorherigen Ansprüche, **dadurch gekennzeichnet, dass** der zweite Speicher mit Datensätzen von einem dritten Speicher, insbesondere von einer zweiten Speicherkarte, geladen wird.

5. Verfahren nach Anspruch 4, **dadurch gekennzeichnet, dass** der zweite Speicher mit Datensätzen vom dritten Speicher drahtgebunden, insbesondere mittels elektrischer Kontakte, geladen wird.

6. Verfahren nach Anspruch 4, **dadurch gekennzeichnet, dass** der zweite Speicher mit Datensätzen vom dritten Speicher drahtlos, insbesondere mittels Radiofrequenz, Infrarot, Funk, oder mittels induktiver oder kapazitiver Datenübertragung geladen wird.

7. Verfahren nach einem der vorherigen Ansprüche, **dadurch gekennzeichnet, dass** die Auswahl der Teildatenmenge mittels zumindest eines, insbesondere am Handstück (1), an der Basisstation (2) oder an der Speicherkarte (3) angeordneten, Stellelements (10) erfolgt.

8. Verfahren nach einem der vorherigen Ansprüche, **dadurch gekennzeichnet, dass** die Datensätze der ersten Datenmenge Werkzeugparameter, insbesondere die Drehzahl und/ oder das Drehmoment, beinhalten.

9. Verfahren nach einem der vorherigen Ansprüche, **dadurch gekennzeichnet, dass** die Datensätze der ersten Datenmenge Parameter für das Handstück (1), insbesondere die Autofunktionsparameter für die Wurzelkanalposition und das maximale Drehmoment, wie z.B. Autoreverse, Autostopp, oder Autoforward, bei denen das Werkzeug selbstständig in Gegenrichtung dreht, stoppt, oder automatisch vorwärts läuft, beinhalten.

10. Verfahren nach einem der vorherigen Ansprüche, **dadurch gekennzeichnet, dass** den Datensätzen der ersten Datenmenge Bezeichnungen, insbesondere der zum jeweiligen Datensatz gehörige Werkzeugname, zugeordnet sind.

11. Verfahren nach einem der vorherigen Ansprüche, **dadurch gekennzeichnet, dass** die Auswahl des Datensatzes aus der übertragenen Teildatenmenge automatisch durch Werkzeugidentifikationsmittel mittels Identifizierung durch Radiofrequenzwellen (RFID), Strichcode am Werkzeug und Lesegerät im Handstück, oder mittels zumindest eines Sensors erfolgt.

12. Vorrichtung zum Programmieren eines zur Wurzelkanalaufbereitung dienenden schnurlosen Handstücks (1) mit einem ersten Speicher und einer Werkzeugaufnahme für ein Behandlungswerkzeug in einem Handstück (1), mit einem zweiten Speicher, vorzugsweise in einer Basisstation (2) oder in einer Speicherkarte (3), mit einer ersten Datenmenge mit mehreren Datensätzen, welche jeweils zumindest einen dem schnurlosen Handstück (1) und/ oder dem betreibbaren Werkzeug zugeordneten Parameter umfassen, **dadurch gekennzeichnet, dass** zumindest ein Stellelement (10) zur Auswahl einer Teildatenmenge aus der ersten Datenmenge, sowie drahtgebundene oder drahtlose Übertragungsmittel zur Übertragung einer Teildatenmenge mit mehreren Datensätzen von dem zweiten Speicher auf den ersten Speicher im Handstück vorgesehen sind und wobei zur Auswahl eines Datensatzes aus der übertragenen Teildatenmenge zumindest ein Stellelement (6) und/ oder Werkzeugidentifikationsmittel an dem Handstück (1) vorgesehen sind.

13. Vorrichtung nach Anspruch 12, **dadurch gekennzeichnet, dass** zur Bereitstellung einer ersten Datenmenge auf einem zweiten Speicher (2, 3) ein dritter Speicher vorgesehen ist, von dem Datensätze auf den zweiten Speicher (2, 3) übertragbar sind.

## Claims

1. A method for programming a cordless handpiece (1) used for root canal treatment and having a first memory and a tool holder for a treatment tool, comprising the steps of:
- providing a first data volume having a plurality of data sets in a second memory, which is arranged in particular in a base station (2) or on a memory card (3), each data set comprising at least one parameter assigned to the cordless handpiece (1) and/or to the treatment tool,
- selecting a partial data volume from the first data volume, **characterized by**
- transmitting the partial data volume having a plurality of data sets to the first memory of the handpiece (1),
- manual or automatic selection of a data set for operation of the handpiece (1) from the plurality of data sets of the transmitted partial data volume by at least one control element (6) or automatically by tool identification means on the handpiece (1).

2. The method according to claim 1, **characterized in that** the partial data volume is transmitted from the second memory to the first memory of the handpiece (1) by a wired connection, preferably by the charging contacts for the battery-operated handpiece (1) which are in the base station (2) or by additional electric contacts.

3. The method according to claim 1, **characterized in that** the partial data volume is transmitted wirelessly from the second memory to the first memory of the handpiece (1), in particular by radiofrequency, infrared, wireless, or inductive or capacitive data transmission.

4. The method according to any one of the preceding claims, **characterized in that** the second memory is loaded with data sets from a third memory, in particular from a second memory card.

5. The method according to claim 4, **characterized in that** the second memory is loaded with data sets from a third memory by a wired connection, in particular by means of electric contacts.

6. The method according to claim 4, **characterized in that** the second memory is loaded with data sets from a third memory by a wireless connection, in particular by radiofrequency, infrared, wireless, or inductive or capacitive data transmission.

7. The method according to any one of the preceding claims, **characterized in that** the selection of the partial data volume is made by at least one control element (10), being positioned in particular on the handpiece (1), on the base station (2) or on the memory card (3).

8. The method according to any one of the preceding claims, **characterized in that** the data sets of the first data volume include tool parameters, in particular the rotational speed and/or the torque.

9. The method according to any one of the preceding claims, **characterized in that** the data sets of the first data volume include parameters for the handpiece (1), in particular the autofunction parameters for the root canal position and the maximum torque, e.g., autoreverse, autostop or autoforward in which the tool automatically rotates in the opposite direction, stops or automatically runs forward.

10. The method according to any one of the preceding claims, **characterized in that** designations, in particular the tool name belonging to the respective data set, are assigned to the data sets of the first data volume.

11. The method according to any one of the preceding claims, **characterized in that** the selection of the data set from the transmitted partial data volume is made automatically by tool identification means by identification based on radiofrequency waves (RFID), a barcode on the tool and a reader in the handpiece or by at least one sensor.

12. A device for programming a cordless handpiece (1) used for root canal treatment having a first memory and a tool holder for a treatment tool in a handpiece (1), a second memory, preferably in a base station (2) or in a memory card (3) having a first data volume comprising a plurality of data sets, each comprising at least one parameter assigned to the cordless handpiece (1) and/or the treatment tool, **characterized in that** at least one control element (10) for selection of a partial data volume from the first data volume and a wired or wireless connection for transmitting a partial data volume from the second memory to the first memory in the handpiece being provided, and for selection of a data set from the transmitted partial data volume at least one control element (6) and/or tool identification means are positioned on the handpiece (1).

13. The device according to claim 12, **characterized in that** a third memory is provided for supplying a first data volume in a second memory (2, 3), data sets being transmissible from this third memory to the second memory (2, 3).

## Revendications

1. Procédé de programmation d'une pièce manuelle sans boucle (1) servant à préparer un canal radiculaire, comportant une première mémoire et un porte-outil pour outil de traitement, comportant les étapes de :
- mise à disposition d'un premier volume de données comportant plusieurs enregistrements sur une deuxième mémoire qui est disposée en particulier dans une station de base (2) ou dans une carte mémoire (3), chaque enregistrement comprenant au moins un paramètre associé à la pièce manuelle sans boucle (1) et/ou à l'outil utilisable,
- sélection d'un sous-volume de données dans le premier volume de données, **caractérisé par**
- le transfert du sous-volume de données contenant plusieurs enregistrements sur la première mémoire de la pièce manuelle (1),
- la sélection manuelle ou automatique d'un enregistrement pour l'activation de la pièce manuelle (1) parmi les plusieurs enregistrements du sous-volume de données transféré au moyen d'au moins un élément de réglage (6) ou automatiquement à l'aide d'un moyen d'identification d'outil placé sur la pièce manuelle (1).

2. Procédé selon la revendication 1, **caractérisé en ce que** le transfert du sous-volume de données de la deuxième mémoire à la première mémoire de la pièce manuelle (1) se fait par fil, de préférence au moyen de contacts de chargement se trouvant dans la station de base (2) pour la pièce manuelle (1) fonctionnant sur pile ou moyen d'autres contacts électriques.

3. Procédé selon la revendication 1, **caractérisé en ce que** le transfert du sous-volume de données de la deuxième mémoire à la première mémoire de la pièce manuelle (1) se fait sans fil, en particulier par fréquence radio, infrarouges, radio ou par transfert de données inductif ou capacitif.

4. Procédé selon une des revendications précédentes, **caractérisé en ce que** la deuxième mémoire est chargée d'enregistrements par une troisième mémoire, en particulier par une deuxième carte mémoire.

5. Procédé selon la revendication 4, **caractérisé en ce que** la deuxième mémoire est chargée d'enregistrements par fil par la troisième mémoire, en particulier au moyen de contacts électriques.

6. Procédé selon la revendication 4, **caractérisé en ce que** la deuxième mémoire est chargée d'enregistrements sans fil par la troisième mémoire, en particulier par fréquence radio, infrarouges, radio ou par transfert de données inductif ou capacitif.

7. Procédé selon une des revendications précédentes, **caractérisé en ce que** la sélection du sous-volume de données se fait au moyen d'au moins un élément de réglage (10) disposé en particulier sur la pièce manuelle (1), à la station de base (2) ou sur la carte mémoire (3).

8. Procédé selon une des revendications précédentes, **caractérisé en ce que** les enregistrements du premier sous-volume de données contiennent des paramètres de l'outil, en particulier la vitesse de rotation et/ou le couple de rotation.

9. Procédé selon une des revendications précédentes, **caractérisé en ce que** les enregistrements du premier volume de données contiennent des paramètres de la pièce manuelle (1), en particulier les paramètres de fonctionnement automatique pour la position du canal radiculaire et le couple de rotation maximal, comme par exemple inversion automatique, arrêt automatique ou avance automatique, avec lesquels l'outil se met à tourner automatiquement dans le sens inverse, s'arrête ou avance automatiquement.

10. Procédé selon une des revendications précédentes, **caractérisé en ce que** sont associées aux enregistrements du premier volume de données des désignations, en particulier le nom d'outil concernant l'enregistrement respectif.

11. Procédé selon une des revendications précédentes, **caractérisé en ce que** la sélection de l'enregistrement dans le sous-volume de données transféré se fait automatiquement à l'aide de moyen d'identification de l'outil par identification au moyen d'ondes de fréquence radio (RFID), code barre sur l'outil et lecteur dans la pièce manuelle ou au moyen d'un détecteur.

12. Dispositif de programmation d'une pièce manuelle sans boucle (1) servant à préparer le canal radiculaire, comportant une première mémoire et un porte-outil pour outil de traitement dans une pièce manuelle (1), une deuxième mémoire, de préférence dans une station de base (2) ou sur une carte mémoire (3), un premier volume de données comportant plusieurs enregistrements qui comprennent respectivement au moins un paramètre associé à la pièce manuelle sans boucle (1) et/ou à l'outil activable, **caractérisé en ce qu'**au moins un élément de réglage (10) pour la sélection d'un sous-volume de données dans le premier volume de données, de même que des moyens de transfert par fil ou sans fil pour le transfert d'un sous-volume de données contenant plusieurs enregistrements de la deuxième mémoire à la première mémoire sont prévus dans la pièce manuelle et dans lequel, pour la sélection d'un enregistrement dans le sous-volume de données transféré, au moins un élément de réglage (6) et/ou un moyen d'identification d'outil sont prévus sur la pièce manuelle (1).

13. Dispositif selon la revendication 12, **caractérisé en ce que**, pour mettre à disposition un premier volume de données sur une deuxième mémoire (2, 3), il est prévu une troisième mémoire depuis laquelle des enregistrements peuvent être transférés vers la deuxième mémoire (2, 3).
